# EUROPÄISCHE PATENTANMELDUNG

(11) **EP 1 655 931 A1**
(43) Veröffentlichungstag der Anmeldung: **10.05.2006**
(21) Anmeldenummer: 04105510.4
(22) Anmeldetag: 04.11.2004
(51) Int. Cl.: H04M 1/725

(54) **Verfahren zur Wiedergabe von Bilddaten**

(71) Anmelder: Swisscom Mobile AG, 3050 Bern (CH)
(72) Erfinder: Lauper, Eric, 3014, Bern (CH); Layani, Eric, 1006, Lausanne (CH)
(74) Vertreter: Saam, Christophe

(57) **Zusammenfassung**

Esist ein Verfahren zur Wiedergabe eines Bildes (3) oder von Bilddaten offenbart. Das Bild (3) oder die Bilddaten werden in Abhängigkeit von im Benutzergerät (1) ermittelten Parametern angepasst und im Display (2) des Benutzergeräts(1) dargestellt. Die Parameter können also beispielsweise von folgenden Grössen abhängen oder durch eine oder eine Kombination dieser Grössen bestimmt werden: Standort oder Gebrauch des Benutzergeräts(1), Gebrauch eines mit dem Benutzergerät (1) verbundenen Dienstes, Uhrzeit, Datum, Tages- oder Jahreszeit oder ein sich im Benutzergerät (1) befindender Sensor (5). Die Erfindung bezieht sich auch auf einen Hypertextserver (8) mit einer dynamischen Seite, welcher das Bild (3) oder die Bilddaten enthält.

## Beschreibung

### Technisches Gebiet

Die Erfindung bezieht sich auf ein Verfahren zur Wiedergabe eines Bildes oder von Bilddaten und auf einen Hypertextserver gemässden unabhängigen Ansprüchen.

### Stand der Technik

Im Stand der Technik gibt eseine Vielzahl von Dokumenten, die sich auf Hintergrundbilder, Logosoder andere elektronische Darstellungen beziehen.

EP-A1-1 199 868 offenbart ein Verfahren zur automatischen Auswahl eines Hintergrundbildes, um es in einem Display eines Mobiltelefonsdarzustellen. EP-A2-1 215 864 beschreibt ein Verfahren, welches das Logo eines Netzbetreibers mittels einer Broadcast-SMS an Mobiltelefone sendet, lokal angepasst und auf dem Display des Mobilgeräts anzeigt, sobald standortbezogene Informationen wiedergegeben werden.

Die Schrift US-A1-2002/0132610 offenbart ein Verfahren und eine Vorrichtung, in dem und in der ein Hintergrundbild eines Mobiltelefons in Abhängigkeit einesbenutzerspezifischen Profilsangepasst wird. En ähnliches Verfahren ist aus JP 2002/345032 bekannt. GB-A-2 373 977 beschreibt ein Hintergrundbild für ein Mobiltelefon, welchesin regelmässigen Abständen angepasst wird. Auf diese Weise entsteht ein animiertes Bild.

Die veröffentlichte Patentanmeldung EP-A1-1 424 839 beschreibt ein Verfahren zum Erstellen von graphischen Animationen, die durch eine Kamera eines Mobiltelefons aufgenommen werden. Die Patentanmeldung EP-A2-1 011 248 offenbart ein Verfahren zur Darstellung von Hintergrundbildern in mobilen Telefonen. Eswird ein Hintergrundbild von einem Computer heruntergeladen, in dem Telefon gespeichert und eine voreingestellte Zeit auf dem Display des Mobiltelefonsabgespielt. Sofern eine dringende Mitteilung das Telefon erreicht, wird das Abspielen der Mitteilung gestoppt, wenn die Mitteilung normalen Charakter aufweist, wird sie erst anzeigt, wenn die Zeit abgelaufen ist.

In dem Patent US-A-5,870,683 wird ein Verfahren zum Abspielen einer Bildersequenz in einem Mobiltelefon offenbart. Die geschieht in einer Ruhephase des Mobiltelefons, wenn keine Anrufe getätigt werden, also beispielsweise bei m Einschalten des Telefons, wen n die Batterie geladen wird oder wenn die Tastatur gesperrt ist.

Die Internationale Veröffentlichung WO-A1-2004/057578 beschreibt ein Logo oder Bild für ein Mobiltelefon, daseinen Mund darstellt. Der Mund wird automatisch an eine Audiomitteilung angepasst, so dassdie Mitteilung vom Mund gesprochen wird.

### Darstellung der Erfindung

Esist ein Ziel der vorliegenden Erfindung, ein Verfahren und eine Vorrichtung zu schaffen, welche(s) es Firmen ermöglicht, verbessert für sich zu werben. Ihre Wort- und/oder Bildmarke, ihr Produkt, ihr Name, ihr Schriftzug oder ihre Werbung, etc. soll auf bessere Weise im Gedächtnisder Kunden hängen bleiben und von den Kunden leichter wiedererkannt werden. Insgesamt sollen sich die Kunden auf verbesserte Weise an die Firma erinnern.

Esist anderes Ziel der vorliegenden Anmeldung, ein Verfahren und eine Vorrichtung zu schaffen, mit dem/der der Benutzer eines Benutzergerätsdurch die Darstellung eines Logosoder eines Hintergrundbildesanimiert und auf angenehme Weise durch seinen Alltag begleitet wird.

Die Aufgabe wird erfindungsgemässdurch ein Verfahren zur Wiedergabe eines Bildes oder von Bilddaten gemässdem unabhängigen Verfahrenanspruch dadurch gelöst, dass das Bild ohne Benutzerintervention in Abhängigkeit mindestens eines automatisch ermittelten Parametersindividuell an jeden Benutzer angepasst und im DisplaydesBenutzergerätsdesbesagten Benutzersdargestellt wird.

Die Aufgabe wird auch durch einen Hypertextserver mit mindestenseiner dynamischen Seite gemässdem unabhängigen Vorrichtungsanspruch gelöst, in dem das Bild oder die Bilddaten in Abhängigkeit mindestens eines automatisch ermittelten Parameters individuell an jeden Benutzer angepasst werden.

Dasgenannte Bild oder die Bilddaten betreffen in der vorliegenden Anmeldung ein Logo oder Hintergrundbild, also beispielsweise eine Wort- und/oder Bildmarke oder den Schriftzug einer Firma oder firmenspezifische Produkte, Namen, Werbung oder Darstellungen.

Der Hypertextserver erstellt ein Logo oder Hintergrundbild, in dem er auf eine Datenbank oder einen anderen Server zugreift, in der/dem mindestens Teile des Logos oder Hintergrundbildes vorhanden sind. Auf diese Weise ist eine dynamische Darstellung einer HTM L-Seite einfach möglich. Bei dieser dynamischen Darstellung können auch im Benutzergerät gespeicherte Daten einer graphischen Schnittstelle einer Anwendungssoftware oder durch Elemente der graphischen Benutzeroberfläche zur Veränderung bzw. Anpassung des Logosoder Hintergrundbildes eingebunden werden. Eine Seite, die beispielsweise durch einen bestimmten Browser aufgerufen wird, könnte so das Logo beeinflussen. Logosoder Hintergrundbilder oder mindestens Teile davon können auch im Benutzergerät gespeichert werden und die Hypertextseite, die heruntergeladen wird, wird erst im Benutzergerät selbst durch diese Logosoder Hintergrundbilder individuell ergänzt.

Vorteilhaft wird bei dem erfindungsgemässen Verfahren ein Logo dynamisch bestimmt und in Abhängigkeit von der Tätigkeit oder vom Gemütszustand des Benutzers oder von Umwelteinflüssen verändert oder angepasst. Der Benutzer wird auf diese Weise auf angenehme Weise durch den Tag begleitet und unterhalten, da sich ein Logo nicht immer auf gleiche Weise wiederholt. Gleichzeitig wirbt die Firma auf originelle Weise für sich und ihre Produkte. Das Logo kann beispielsweise von folgenden Grössen abhängen: der Standort oder Gebrauch des Benutzergerätes, der Gebrauch eines mit dem Benutzergerät verbundenen Dienstes, Uhrzeit, Datum, Tages- oder Jahreszeit oder ein sich im Benutzergerät befindender Sensor, welcher Daten von ausserhalb desMobilgerätsaufnimmt. En solcher Sensor könnte auch über eine Schnittstelle, die im Nahbereich arbeitet (Bluetooth, ZgBee, WLAN, DECT, etc.), oder über eine andere Schnittstelle (bspw. Internetanschluss) mit dem Benutzergerät verbunden werden. Eskönnen auch nur Teile, die Farben oder die Gestaltung des Logosoder Hintergrund bildes verändert werden. Firmen, die auf diese Weise ihr Logo oder ihre Marke präsentieren, bleiben vorteilhaft länger im Gedächtnisdes Benutzers haften und die Marke bekommt ein besonderes Image.

Für daserfindungsgemässe Verfahren sind zahlreiche Ausführungsformen denkbar. So kann das Logo in Abhängigkeit von einem vom Benutzer eingestellten Profil verändert werden. Um den Benutzer nicht zu überfordern oder Belästigungen zu vermeiden, sollte der Modus "veränderliches Logo" aus- und wieder einschalten werden können. Die Art oder Typ des Benutzergeräts kann eine Rolle bei der Darstellung eines veränderlichen Logosspielen oder das Logo oder Hintergrundbild könnte nur in Ruhepausen dargestellt werden, in denen der Benutzer keine bestimmte Funktion oder keinen bestimmten Dienst aufruft.

Bezüglich der Gestaltung des Logos kann eine in das Benutzergerät eingebaute Kamera, oder ein Sensor, der physikalische Daten oder Daten, die den Benutzer betreffen, bei der Veränderung des Logos miteingebunden werden. Um eine verbesserte Interaktivität zu schaffen, könnte der Benutzer Logosoder Teile davon, die später dargestellt werden sollen, auch selber auswählen. Ein Anbieter wird in regelmässigen Abständen den Benutzer über neue Logosoder Hintergrundbilder informieren.

### Kurze Beschreibung der Rguren

Die Erfindung wird anhand der beigefügten Figuren näher erläutert, wobei
- **Fig. 1**: ein Benutzergerät mit einem im Display des Benutzergeräts dargestellten Logo zeigt,
- **Fig. 2**: ein über ein Mobilfunknetz mit einem Hypertextserver verbundenes Mobiltelefon als Beispiel eines Benutzergeräts darstellt und
- **Fig. 3-5**: ein Benutzergerät mit einem im Display des Benutzergeräts dargestellten Logo zeigen, wobei das Logo in verschiedenen Figuren in Abhängigkeit von verschiedenen Ereignissen verändert gestaltet ist.

Eswerden nur die für das Verständnis der Erfindung wichtigen Elemente dargestellt. Gleiche Elemente werden in unterschiedlichen Figuren gleich bezeichnet.

### Wege zur Ausführung der Erfindung

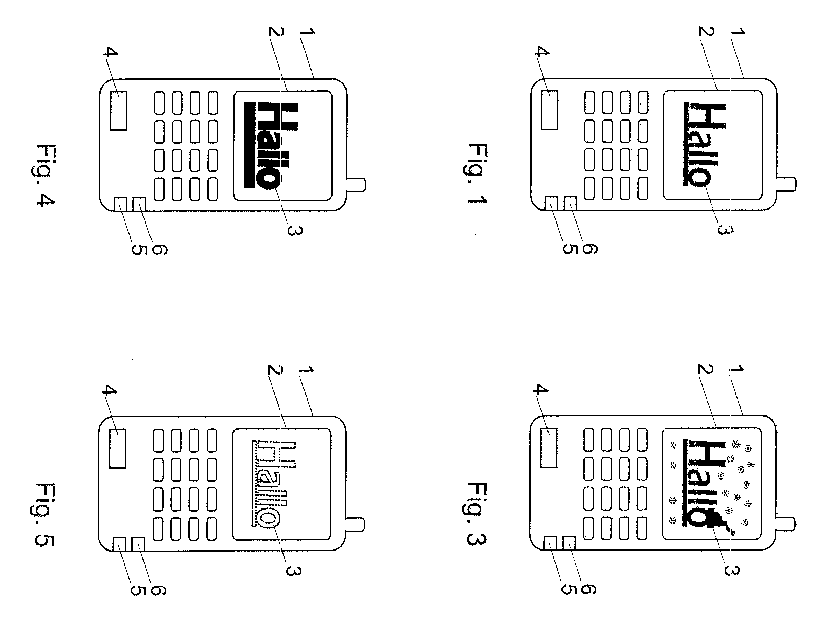

Die Figur 1 zeigt ein Benutzergerät 1 mit einem Display 2, in welchem ein Bild 3 oder Bilddaten dargestellt sind. Das Bild 3 oder die Bilddaten betreffen in der vorliegenden Erfindung ein Logo oder Hintergrundbild, eine Wort- und/oder Bildmarke oder den Schriftzug einer Firma oder firmenspezifische Produkte, Namen, Werbung oder Darstellungen. Bei dem genannten Benutzergerät 1 kann essich um einen Computer, einen tragbaren Computer, einen PDA, ein Spielterminal oder ein anderes Mobilgerät, vorzugsweise um ein Mobilfunkgerät, Mobiltelefon, etc. handeln. Das Benutzergerät 1 kann aber eine Armbanduhr sein, in welche ein Display integriert ist. Das Display 2 kann in dem Benutzergerät 1 direkt befestigt sein oder mit dem Benutzergerät 1 verbunden sein. En Retinal Scanning Display kann beispielsweise kann beispielsweise an einem Brillengestell befestigt sein.

Entsprechend dem erfindungsgemässen Verfahren wird ein bestimmtes Logo oder Hintergrundbild 3 im Display 2 dargestellt. Dies geschieht in der Regel während der Anwendung einer für sich werbenden Firma bzw. auf der Seite der Firma oder in der Werbemeldung oder - sendung dieser Firma. In Abhängigkeit vom Zustand des Benutzers, von im Benutzergerät 1 ermittelten Parametern und/oder in Abhängigkeit von anderen externen Einflüssen wird nun ein verändertes Logo oder Hintergrundbild 3 automatisch bestimmt. Esfür daserfindungsgemässe Verfahren werden das Bild 3 oder die Bilddaten bzw. das Logo oder Hintergrundbild 3 ohne Benutzerintervention individuell an jeden Benutzer angepasst.

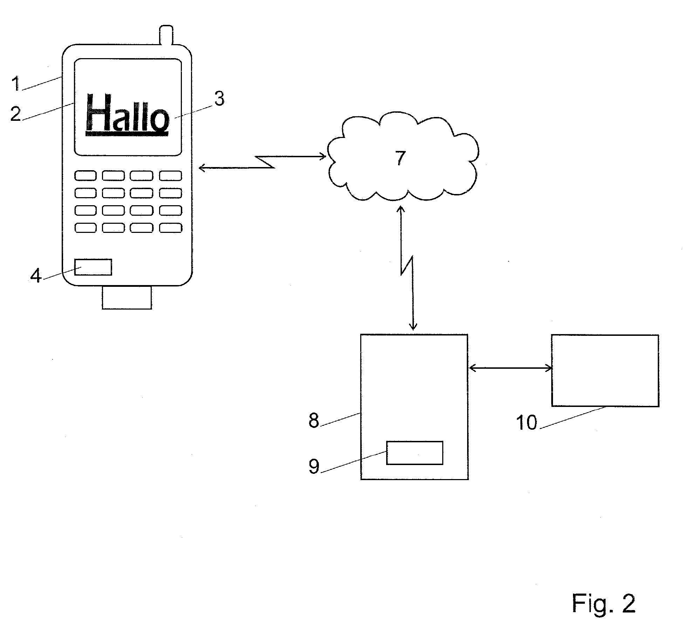

Für verschiedene Benutzer, welche eine Seite eines Hypertextservers8 herunterladen und ansehen, wird ein unterschiedliches Logo oder Hintergrundbild 3 der gleichen Firma wiedergegeben. Diese Ausführungsform deserfindungsgemässen Verfahrenswird mit Hilfe der Fig. 2 erläutert. Das Benutzergerät 1 ist in diesem Fall ein Mobilfunkgerät, beispielsweise ein Mobiltelefon, welches über ein Mobilfunknetzes7 mit einem erfindungsgemässen Hypertextserver 8 verbunden ist. Das Mobilfunknetz 7 ist beispielsweise ein bekanntes GSM oder UMTS-Funknetz. En Logo oder Hintergrundbild 3 oder Teile davon sind in einer Datenbank 9, die ein Teil des Hypertextservers8 darstellt, gespeichert. Wird nun eine Hypertextseite des Hypertextservers 8 vom Mobilfunkgerät abgefragt, werden bestimmte Parameter, die im folgenden noch erläutert werden, vom Mobilfunkgerät auf den Hypertextserver 8 übertragen. Die Hypertextseite (html) enthält dynamische Anteile, die mindestensdas veränderliche Logo 3 betreffen. Zu diesem Zweck ist der Hypertextserver 8 mit einer Datenbank 9 oder einem anderen Server 10 verbunden, welcher diese Anteile des veränderlichen Logos3 in Abhängigkeit von den übertragenen Parametern bereitstellt. In einer weiteren Ausführungsform wird ein im Benutzergerät 1 gespeichertesund/oder ein vom Server herunterzuladendes Logo 3 oder Teile davon mit anderen Elementen, die bereitsan einer Stelle im Benutzergerät 1 vorhanden sind, kombiniert und in das Logo eingebunden. Das Logo oder Hintergrundbild 3 kann so vorteilhaft auf die aktuellen, lokalen Anwendungen oder Einstellungen des Benutzergeräts 1 eingehen und diese in den Veränderungsprozess einbinden. Eskönnten somit auch Daten in die Hypertextseite eingebunden werden, die Informationen oder Elemente auseiner graphischen Schnittstelle einer Anwendungssoftware oder ausder graphischen Oberfläche des Betriebssystems (Betriebssystem-GUI) entnimmt und auf die genannte Weise in die zu erstellende Seite einbaut. Eine Seite, die beispielsweise durch einen bestimmten Browser aufgerufen wird, könnte so das Logo 3 beeinflussen. Im Hypertextserver 8 wird die Hypertextseite dann komplett bereitgestellt und diese wird an das Mobiltelephon gesendet. Das Logo 3 wird in einem bekannten Dateiformat jpeg, gif, png, als Vektor, etc. bereitgestellt. Esist auch denkbar, dassdie veränderlichen Logos 3 oder Teile davon im Benutzergerät 1 gespeichert werden. Zu diesem Zweck ist eine Datenbank 4 oder ein Datenspeicher im Mobiltelefon 1 vorhanden und die aufgerufene und heruntergeladene Hypertextseite wird erst im Benutzergerät individuell ergänzt.

Dasgenannte Ausführungsbeispiel ist jedoch keinesfallsauf ein Mobilfunknetz 7 und die angeschlossenen und in der Fig. 2 dargestellten Geräte beschränkt. En an das Internet angeschlossener Computer, der mit einem Hypertextserver kommuniziert, ist genauso denkbar.

Die genannten Parameter werden in Abhängigkeit von vom Benutzer aufgerufenen Funktionen oder Dienste während des Betriebsdes Benutzergeräts 1 bestimmt. Es handelt sich aber nicht um daseinfache Aufrufen oder Ausführen eines Programms, sondern um andere Tätigkeiten, die der Benutzer während der Benutzung des Geräts 1 durchführt. Das Bild 3 oder die Bilddaten können Teil einer Spielszene in einem Spielterminal sein, wobei die Bild- oder Bilddatenattribute in Abhängigkeit von automatisch ermittelten Parametern angepasst werden. Beispielsweise werden in der Spielszene Werbeplakate an Rand einer Strasse angezeigt, deren Inhalt einerseitsvon einem Werber und andererseitsvon Sensordaten abhängig ist. Somit können die im Spiel angezeigten Werbeplakate an die Umstände angepasst sein. Die Parameter können also beispielsweise von folgenden Grössen abhängen oder durch eine oder eine Kombination dieser Grössen bestimmt werden: Standort oder Gebrauch des Benutzergeräts 1, Gebrauch eines mit dem Benutzergerät 1 verbundenen Dienstes, Uhrzeit, Datum, Tages- oder Jahreszeit oder ein sich im Benutzergerät 1 befindender Sensor, welcher Daten von der Umgebung des Benutzergeräts 1 oder von der Sensor 5 aufnimmt. En solcher Sensor könnte auch über eine Schnittstelle, die im Nahbereich arbeitet (Bluetooth, Zgbee, WLAN, DECT, etc.), oder über eine andere Schnittstelle (bspw. Internetanschluss) mit dem Benutzergerät verbunden werden. Auch die Dauer ei nes verwendeten Dienstes, einer speziellen Anwendung, wie der Empfang einer Email oder die Benutzung des eingebauten Kalenders, etc. kann einen Einfluss auf den genannten Parameter haben.

Um die vorliegende Erfindung zu verdeutlichen, ist in den Figuren 1, 3 bis5 ein verändertes Logos beispielhaft dargestellt. Eine Firmenmarke *Hallo* ist zunächst im Display 2 dargestellt (Fig. 1). Wenn durch einen internen Kalender festgestellt wird, dass Winteranfang oder Weihnachten ist, oder durch einen Sensor 5 eine Aussentemperatur von unter 0 Grad Celsiusgemessen wird, wird beispielsweise ein schneebedecktes *Hallo* gezeigt, welches auf dem "o" eine Mütze zum Schutz vor der Kälte trägt (Fig. 3). Wenn der Benutzer eines Mobiltelefons tagsüber sehr viel telefoniert oder SMSgeschrieben hat und sehr viel in der Stadt unterwegswar, wasdurch ein eingebautes Standortbestimmungs system erkennbar ist, der Benutzer also eher sehr aktiv ist, wird ein rötliches oder rotes, fettgedrucktes *Hallo* angezeigt (Fig. 4). Wenn ein mit dem Benutzergerät oder mit einem nicht dargestellten Benutzeridentifizierungsmodul (beispielsweise ein SM-Modul ausder GSM-Welt) verbundenesWertkonto, beispielsweise ein Prepaidkonto fast aufgebraucht wurde und die Erneuerung oder das Nachladen dringend notwendig ist, wird schwaches, fast verschwindendes *Hallo* angezeigt (Fig. 5). Wichtig bei der vorliegenden Erfindung ist, dassessich um eine benutzungs-, benutzer- oder umweltabhängige Veränderung des Logos oder Hintergrundbildes3 handelt, die nicht vorprogrammiert ist, sondern dynamisch in dem Hyperserver 8 durch Zugriff auf den genannten Server 10 bestimmt wird. Es kann, esmussaber nicht notwendigerweise das ganze Logo oder Hintergrundbild 3 ausgetauscht werden. Eskönnen auch nur einige Teile, die Farben oder die individuelle Gestaltung des Logosoder Hintergrundbilds 3 verändert oder angepasst werden, wie diesin den Figuren 1 und 3 bis5 gezeigt ist. Als Logo oder Hintergrundbild 3 eignen sich selbstverständlich animierte Bilddaten wie Zeichentrickfilme oder Comics. Auch eine zufällige Veränderung und Anpassung des Logos oder Hintergrundbilds3 in Abhängigkeit von den genannten Grössen ist denkbar.

Das Logo oder Hintergrundbild 3 kann in Abhängigkeit von einem vom Benutzer eingestellten Profil verändert werden. So kann der Benutzer mindestensteilweise selbst bestimmen, welche oder wie viele Veränderungen er zulassen will. Um Belästigungen zu vermeiden, sollte der Benutzer den Modus *veränderliches Logo* auch aus- und wieder einschalten können. Auch die Art oder Typ des Benutzergeräts 1 kann eine Rolle bei der Darstellung einesveränderlichen Logosspielen. So ist esdenkbar, dass zwei Benutzer, die die gleichen Tätigkeiten mit Geräten eines gleichen Herstellersausüben, deshalb unterschiedliche Logoserhalten, weil sie ein anderes Modell des Herstellers besitzen. Das Logo oder Hintergrundbild könnte nur in Ruhepausen dargestellt werden, in denen der Benutzer keine bestimmte Funktion oder keinen bestimmten Dienst aufruft.

Das Logo oder Hintergrundbild 3 kann auch ganz oder teilweise Bilder enthalten, die von einer in das Benutzergerät 1 eingebauten Kamera 6 aufgenommen wurden. Wenn der bereitserwähnte Sensor 5 bestimmte physikalischen Daten, wie Luftdruck, Temperatur, Lichteinstrahlung, etc. aufnimmt, können diese Daten bei der Veränderung des Logos eingebunden und verwertet werden, um beispielsweise Logosfür Sommertage und Winternächte zu schaffen. Das gleiche gilt für vom Sensor aufgenommene Daten, die den Benutzer betreffen, so zum Beispiel Blutdruck, Plusfrequenz, Blutsättigung, Hauttemperatur, etc.

En Logo oder Hintergrundbild 3 kann vom Benutzer auseiner Liste ausgewählt werden, bevor esheruntergeladen wird. En solcher Dienst würde dem Benutzer verrechnet werden und der Benutzer mussfür das Herunterladen eines Logosoder Hintergrundbilds 3 bezahlen oder er wird dafür bezahlt. Der Anbieter von seiner Seite informiert in regeimässigen Abständen den Benutzer des Benutzergeräts 1 über neue Logos oder Hintergrundbilder 3.

Vorteilhaft wird bei dem erfindungsgemässen Verfahren ein Logo oder Hintergrundbild 3 dynamisch bestimmt und in Abhängigkeit von der Tätigkeit des Benutzers, vom Gemütszustand des Benutzers oder von Umwelteinflüssen im Hypertextserver 8 oder im Benutzergerät 1 dynamisch verändert oder angepasst. Der Benutzer wird auf diese Weise auf angenehme Weise durch seinen Tag begleitet und unterhalten, da sich ein Logo nicht immer auf gleiche Weise wiederholt. Gleichzeitig wirbt die Firma auf originelle Weise für sich und ihre Produkte.

Sinngemäss sind daserfindungsgemässe Verfahren und die erfindungsgemässe Vorrichtung auch für die Veränderung und die Wiedergabe von Tondaten über einen Lautsprecher anstatt über Bilddaten über ein Display geeignet.

### Bezugszeichenliste

- 1: Benutzergerät
- 2: Display
- 3: Bild, Logo oder Hintergrundbild
- 4: Datenbank im Benutzergerät 1
- 5: Sensor im Benutzergerät 1
- 6: Kamera im Benutzergerät 1
- 7: Mobilfunknetz
- 8: Hypertextserver
- 9: Datenbank im Server 7
- 10: Server

## Patentansprüche

1. Verfahren zur Wiedergabe von Bildern (3) oder Bilddaten im Display (2) einer Vielzahl von Benutzergeräten (1), wobei das Verfahren die folgende Verfahrensschritte umfasst:
- ein Bild (3) oder Bilddaten werden ohne Benutzerintervention in Abhängigkeit mindestenseinesautomatisch ermittelten Parameters individuell an jeden Benutzer angepasst und
- im Display (2) des Benutzergeräts (1) des besagten Benutzersdargestellt.

2. Verfahren nach Anspruch 1, **dadurch gekennzeichnet, dass**als genanntes Bild oder Bilddaten ein Logo oder Hintergrundbild (3), also eine Wort- und/oder Bildmarke oder den Schriftzug einer Firma oder firmenspezifische Produkte, Namen, Werbung oder Darstellungen, darstellt werden.

3. Verfahren nach Anspruch 1 oder 2, **dadurch gekennzeichnet, dass**das Bild (3) oder die Bilddaten auf einer Hypertextseite vorhanden sind und für verschiedene Benutzer, die dieselbe Seite herunterladen und ansehen, ein unterschiedliches Bild (3) wiedergegeben wird.

4. Verfahren nach Anspruch 3, **dadurch gekennzeichnet, dass**der Hypertextserver (8) ein Bild (3) oder Bilddaten erstellt, in dem er auf eine Datenbank oder einen anderen Server (10) zugreift, in der mindestens Teile des Bildes (3) vorhanden sind.

5. Verfahren nach Anspruch 3, **dadurch gekennzeichnet, dass** das das Bild (3), die Bilddaten oder Teile davon im Benutzergerät (1) gespeichert werden und die Hypertextseite im Benutzergerät (1) durch das Bild (3) individuell ergänzt werden.

6. Verfahren nach einem der Ansprüche 1 bis 5, **dadurch gekennzeichnet, dass** Bilder (3), Bilddaten oder Teile davon mit einer graphischen Schnittstelle einer Anwendungssoftware oder mit Elementen der graphischen Benutzeroberfläche des Benutzergeräts (1) kombiniert werden.

7. Verfahren nach einem der Ansprüche 1 bis6, **dadurch gekennzeichnet, dass** das Bild (3) oder die Bilddaten in Abhängigkeit
- vom Standort oder vom Gebrauch des Benutzergerätes (1),
- vom Gebrauch eines mit dem Benutzergerät (1) verbundenen Dienstes,
- von der Uhrzeit, vom Datum, der Tages- oder Jahreszeit,
- von einem sich im Benutzergerät (1) befindenden oder mit dem Benutzergerät (1) verbundenen Sensor (4), welcher Daten von ausserhalb desBenutzergeräts(1) aufnimmt, oder
- in Abhängigkeit von einer Kombination der genannten Grössen angepasst werden.

8. Verfahren nach einem der Ansprüche 1 bis 7, **dadurch gekennzeichnet, dass**nur Teile, die Farben oder die Gestaltung desselben Bilds(3) oder der Bilddaten verändert oder angepasst werden.

9. Verfahren nach einem der Ansprüche 1 bis8, **dadurch gekennzeichnet, dass**mindestensalsein Teil eines Bilds (3) animierte Bilddaten wie Zeichentrickfilme oder ein Comicsverwendet werden.

10. Verfahren nach einem der Ansprüche 1 bis9, **dadurch gekennzeichnet, dass**das Bild (3) oder die Bilddaten in Abhängigkeit von den genannten Grössen oder Parametern zufällig verändert oder angepasst werden.

11. Verfahren nach einem der Ansprüche 1 bis 10, **dadurch gekennzeichnet, dass**das Bild (3) oder die Bilddaten in Abhängigkeit von einem vom Benutzer eingestellten Profil verändert werden.

12. Verfahren nach einem der Ansprüche 1 bis 11, **dadurch gekennzeichnet, dass**das Bild (3) oder die Bilddaten in Abhängigkeit von der Art des Benutzergeräts (1) verändert werden.

13. Verfahren nach einem der Ansprüche 1 bis 12, **dadurch gekennzeichnet, dass**das Bild (3) oder die Bilddaten mindestensteilweise Bilder, die von einer Kamera (6), welche das Benutzergerät (1) enthält, aufgenommen wurden, enthalten.

14. Verfahren nach einem der Ansprüche 1 bis 13, **dadurch gekennzeichnet, dass**ein Bild (3) oder Bilddaten vom Benutzer auseiner Liste ausgewählt werden.

15. Verfahren nach einem der Ansprüche 1 bis 14, **dadurch gekennzeichnet, dass**der Benutzer des Benutzergeräts (1) über neue Bilder (3) von einem Anbieter informiert wird.

16. Verfahren nach einem der Ansprüche 1 bis 15, **dadurch gekennzeichnet, dass**das Bild (3) oder die Bilddaten nur in Ruhepausen dargestellt werden, in denen der Benutzer keine Funktion oder keinen Dienst aufruft.

17. Verfahren nach einem der Ansprüche 1 bis 16, **dadurch gekennzeichnet, dass** als Benutzergerät (1)ein Mobilgerät, vorzugsweise ein Mobiltelefon, ein tragbarer Computer, ein Spielterminal oder ein PDA, verwendet wird.

18. Verfahren nach einem der Ansprüche 1 bis 17, **dadurch gekennzeichnet, dass**das Benutzergerät (1)ein Modus, in welchem die Darstellung desBilds(3) oder der Bilddaten gemässAnspruch 1 verändert oder angepasst wird, ein- oder ausgeschaltet wird.

19. Hypertextserver (8) mit mindestens einer dynamischen Seite, die ein Bild (3) oder Bilddaten enthält, wobei das Bild (3) oder die Bilddaten in Abhängigkeit mindestenseinesautomatisch ermittelten Parameters individuell an jeden Benutzer angepasst werden.

20. Hypertextserver (8) nach Anspruch 19, **dadurch gekennzeichnet, dass**die dynamische Seite als genanntes Bild oder als Bilddaten ein Logo oder Hintergrundbild (3), also eine Wort- und/oder Bildmarke oder den Schriftzug einer Firma oder firmenspezifische Produkte, Namen, Werbung oder Darstellungen, enthält.

21. Hypertextserver (8) gemässAnspruch 19 oder 20, **dadurch gekennzeichnet, dass**das Bild (3) oder die Bilddaten der dynamischen Seite in Abhängigkeit
- vom Standort oder vom Gebrauch des Benutzergerätes (1),
- vom Gebrauch eines mit dem Benutzergerät (1) verbundenen Dienstes,
- von der Uhrzeit, vom Datum, der Tages- oder Jahreszeit,
- von einem sich im Benutzergerät (1) befindenden oder mit dem Benutzergerät (1) verbundenen Sensor (4), welcher Daten von ausserhalb desMobilgeräts(1) aufnimmt, oder
- in Abhängigkeit von einer Kombination der genannten Grössen anpassbar sind.

22. Hypertextserver (8) gemässeinem der Ansprüche 19 bis21, **dadurch gekennzeichnet, dass**der Hypertextserver (8) mit einer Datenbank (9) oder einem anderen Server (10) verbunden ist, in der oder in dem mindestens Teile des Bildes (3) oder der Bilddaten vorhanden sind.
